# EUROPEAN PATENT APPLICATION

(11) **EP 1 031 749 A1**
(43) Date of publication of application: **30.08.2000**
(21) Application number: 00103708.4
(22) Date of filing: 22.02.2000
(51) Int. Cl.: F16D 27/115

(54) **An electromagnetic clutch and a driving force transmission device using the same**

(30) Priority: 22.02.1999 JP 4377899
(71) Applicant: TOYODA KOKI KABUSHIKI KAISHA, Kariya-shi Aichi-ken (JP)
(72) Inventor: Takuno, Hiroshi, Kariya-shi, Aichi-ken (JP); Nakaba, Hiroyuki, Kariya-shi, Aichi-ken (JP)
(74) Representative: Leson, Thomas Johannes Alois, Dipl.-Ing.

(57) **Abstract**

An electromagnetic clutch provides a magnetic-path forming member (11b), a frictional clutch (14) and an armature positioned (15) at one side of the magnetic-path forming member, a supporting member (16) arranged at the other side of the magnetic-path forming member, an electromagnet (13) rotatably supported by the supporting member, facing area formed between the supporting member and the magnetic-path forming member through a gap, and a protrusion (16a1,16a2) provided on the facing area at one of the supporting member (16) and the magnetic-path forming member (11b). Further, a magnetic-path that a magnetic flux circulating from the electromagnet as a base point passes is established from the protrusion provided on the facing area through the supporting member, the magnetic-path forming member, the frictional clutch and the armature. In such a construction, the other of the supporting member and the magnetic-path forming member is overhung with respect to the protrusion.

## Description

### BACKGROUND OF THE INVENTION

### Field of the Invention:

The present invention relates to an electro-magnetic clutch and a driving force transmission device using the same.

### Description of the Related Art:

As an example of a conventional electro-magnetic clutch, it is disclosed in Japanese Utility Model Publication No. 6-16731. In this publication, it is disclosed that the conventional electro-magnetic clutch provides a magnetic-path forming member, a frictional clutch and an armature positioned at a one side of the magnetic-path forming member, and an electromagnet supported by a supporting member that is rotatably engaged with a depression arranged at the other side of the magnetic-path forming member. In such a situation, a magnetic-path that passes a magnetic flux circulating from the electromagnet as a base point is formed through the supporting member, the magnetic-path forming member, the frictional clutch and the armature.

In the conventional electro-magnetic clutch as disclosed in that Utility Model, a magnetic force for an attractive operation of the armature to the electromagnet is generated by the magnetic flux passing the above-mentioned magnetic-path with exciting of an electromagnetic coil of the electromagnet, so that the armature is attracted aside of the frictional clutch, whereby the frictional clutch is frictionally engaged in correspondence with the magnetic force. With this operation, the electromagnetic clutch is operated.

In the electromagnetic clutch, a magnetic-path area corresponds to a facing area between the magnetic-path forming member and the supporting member engaged therewith. However, in a case that the magnetic-path area changes, it causes to change a frictional engagement force of the frictional clutch according to changing of the magnetic force by changing of the magnetic-path area. In the aforementioned electromagnetic clutch, the supporting member is rotatably supported at the other side of the magnetic-path forming member by engagement of the depression thereof. The facing area between the magnetic-path forming member and the supporting member engaged therewith may be changed due to fluctuation in a backlash of a bearing rotatably supporting the supporting member, dimensional errors of the magnetic-path forming member and the supporting member, assembling errors and the like. In a case that the facing area changes from a predetermined value, the magnetic-path area is also changed from the predetermined value. Therefore, it causes to change a clutch characteristic of the electromagnetic clutch.

As a result, this changing of the clutch characteristic of the electromagnetic clutch causes a big influence into an operation of a device in which the electromagnetic clutch is adopted as an actuator. In a driving force transmission device employing the electromagnetic clutch as a pilot clutch, it is occurred such a fluctuation (i.e., decrease) in a transmissive torque due to changing in the clutch characteristics of the electromagnetic clutch.

### SUMMARY OF THE INVENTION

Accordingly, an object of the present invention is to solve the above-mentioned problems, i.e., to prevent changing in clutch characteristic of an electromagnetic clutch (frictional engagement force of a frictional clutch) caused due to changing in magnetic force corresponding to changing in magnetic-path area, by maintaining facing area of a magnetic-path forming member with a supporting member engaged therewith.

Briefly, according to the present invention, an electromagnetic clutch provides a magnetic-path forming member, a frictional clutch and an armature positioned at one side of the magnetic-path forming member, a supporting member arranged at the other side of the magnetic-path forming member, an electromagnet rotatably supported by the supporting member, facing area formed between the supporting member and the magnetic-path forming member through a gap, and a protrusion provided on the facing area at one of the supporting member and the magnetic-path forming member. Further, a magnetic-path that a magnetic flux circulating from the electromagnet as a base point passes is established from the protrusion provided on the facing area through the supporting member, the magnetic-path forming member, the frictional clutch and the armature. In such a construction, the other of the supporting member and the magnetic-path forming member is overhung with respect to the protrusion.

With this configuration, since the magnetic-path forming member is formed so as to project over the protrusion, even if an assembling position of the supporting member is departed in an axial direction, the protrusion cannot be projected over the magnetic-path forming member. Therefore, it can be prevented to decrease the magnetic-path area due to dimensional errors of the magnetic-path forming member and the supporting member, assembling errors and the like, whereby it may be impossible to change clutch characteristic of the electromagnetic clutch due to these errors.

### BRIEF DESCRIPTION OF THE ACCOMPANYING DRAWINGS

Various other objects, features and many of the attendant advantages of the present invention will be readily appreciated as the same becomes better understood by reference to the following detailed description of the preferred embodiments when considered in connection with the accompanying drawings, in which:
FIG. 1 is a partially cross-sectional view showing a driving force transmission device employing as a pilot clutch mechanism an electromagnetic clutch according to an example of the present invention;
FIG. 2 is an explanatory view showing a state in which a yoke is assembled into a rear cover in the electromagnetic clutch according to the present invention; and
FIG. 3 is a block diagram showing a four-wheel drive vehicle in which the driving force transmission device employing the electromagnetic clutch according to the present invention.

### DETAILED DESCRIPTION OF THE PREFERRED EMBODIMENT

Embodiments according to the present invention will be hereinafter described with reference to the accompanying drawings.

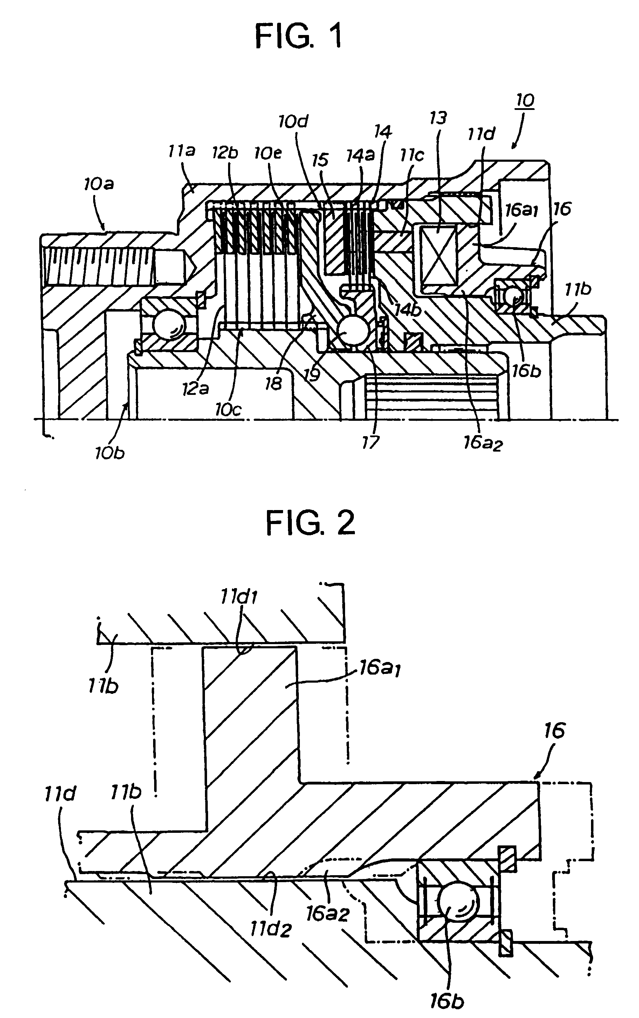

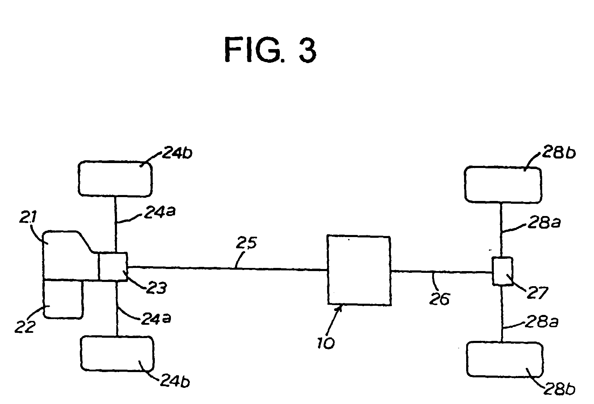

FIG. 1 shows a driving force transmission device 10 into which an electromagnet type clutch that is an example of an electro-magnetically operated mechanism according to the present invention is installed as a pilot clutch mechanism. The driving force transmission device 10, as shown in Fig. 3, is mounted onto a four-wheel drive vehicle (referred to as a 4WD vehicle hereinafter) to transmit a driving force from a front wheel side to a rear wheel side. Besides, main portions of the driving force transmission device 10 are constructed generally symmetrically with respect to a rotational axis thereof, so that generally half portions thereof are shown in Fig. 1 and the remaining portions thereof are omitted therein.

In the 4WD vehicle, a transaxle 21 is provided together with a transmission, a transfer and a front differential. The driving force from an engine 22 is transferred to bath axle shafts 24a through the front differential 23 of the transaxle 21 to drive right-left front wheels 24b, and is also transferred to a first propeller shaft 25. The first propeller shaft 25 is connected with a second propeller shaft 26 through the driving force transmission device 10. When the first propeller shaft 25 is torque-transmittably connected with the second propeller shaft 26, the driving force is transferred to a rear differential 27. Subsequently, the driving force from the rear differential 27 is transferred to both axle shafts 28a to drive left-right rear wheels 28b.

The driving force transmission device 10 is of that is disposed between the first and second propeller shafts 25 and 26, and is provided with an outer case 10a, an inner shaft 10b, a main clutch mechanism 10c, a pilot clutch mechanism 10d and a cam mechanism 10e, as shown in Fig. 1. The electro-magnet type clutch that is an example of the electro-magnetically operated mechanism according to the present invention is adapted as the pilot clutch mechanism 10d.

The outer case 10a as a constructive part of the driving force transmission device 10 is formed with a housing 11a in the form of a bottomed cylindrical shape, and a rear cover 11b which is threadedly engaged with the housing 11a at a rear-end portion thereof to close an opening portion thereof The housing 11a is made of aluminum alloy that is a nonmagnetic material, and the rear cover 11b is made of steel that is a magnetic material to make it to serve as a magnetic-path forming member in the present invention. In a middle portion of the rear cover 11b in a radial direction thereof, there is disposed a cylindrical member 11c made of stainless steel that is nonmagnetic material, to form a cylindrical nonmagnetic portion.

The inner shaft 10b is coaxially inserted into the housing 11a of the outer case 10a, and is fluid-tightly penetrated into the rear cover 11b at its middle portion. Constructed above, the housing 11a and the rear cover 11b are rotatably supported relatively with each other in a state that the inner shaft 10b is restrained to move in an axial direction. Further, an end portion of the second propeller shaft 26 is inserted into the inner shaft 10b to torque-transmittably connect with each other. Besides, the first propeller shaft 25 is torque-transmittably connected with the housing 11a, that constructs the outer case 10a, at its front-end portion.

The main clutch mechanism 10c, i.e., a frictional clutch in the form of a wet multi-disk type is composed of a plurality of clutch plates (inner clutch plates 12a and outer clutch plates 12b), and is disposed within the housing 11a. Each of the inner plates 12a constitutive of the frictional clutch is movably assembled in the axial direction to be spline-engaged with an outer peripheral portion of the inner shaft 10b. Similarly, each of the outer clutch plates 12b is also movably assembled in the axial direction with being spline-engaged with an inside surface portion of the housing 11a. The inner and outer plates 12a and 12b are alternately positioned so as to be contacted with each other. Therefore, the inner and outer plates 12a and 12b are frictionally engaged with each other, and arranged movably in the axial direction, thereby being brought into a free state in each thereof.

The pilot clutch mechanism 10d that is an electro-magnetic clutch comprises an electromagnet 13, a frictional clutch 14, an armature 15 and a yoke 16. The electromagnet 13 takes the form of a cylindrical shape and is press-fitted into a cylindrical depression 11d of the rear cover 11b in a state that it is attached to the yoke 16. The yoke 16 serves as a supporting member in the present invention. The driving force transmission device 10 is secured to a vehicle body in a state that a rear-end portion of the rear cover 11b is supported thereon at its outer peripheral portion. The frictional clutch 14 and the armature 15 of the pilot clutch mechanism 10d serve as an actuator in the present invention.

The frictional clutch 14 that is a wet multi-disk type, is composed a plurality of outer clutch plates 14a and inner clutch plates 14b. Each of the outer clutch plates 14a is slidably assembled in the axial direction with being spline-engaged with an inner surface portion of the housing 11a. On the other hand, each of the inner clutch plates 14b is slidably assembled in the axial direction to be spline-engaged with an outer peripheral portion of a first cam member 17 that constructs a cam mechanism 10e (described hereafter in detail).

The armature 15 formed cylindrically is movably assembled in the axial direction by being spline-engaged with the inner portion of the housing 11a, and is arranged in the front of the frictional clutch 14 as facing therewith.

As described above about the construction of the pilot clutch 10d, a magnetic path is established by exciting an electro-magnetic coil of the electromagnet 13 so as circulate the yoke 16, the rear cover 11b, the frictional clutch 14 and the armature 15 based upon the electro-magnet 13 as a base point. In this case, an outer surface of an annular protrusion 16a1 at an outside portion of the yoke 16 faces a part of an outside inner surface 11d1 at an annular depression 11d of the rear cover 11b, and an inner surface of an inward protrusion 16a2 at an inside portion of the yoke 16 faces a part of an inside outer surface 11d2 thereat. As a result of the above construction, magnetic-path areas are respectively defined with these facing areas, i.e., with widths of the annular protrusion 16a1 and of the inward protrusion 16a2, and the magnetic-path is formed through the magnetic-path areas.

Besides, it is possible to select three modes described hereafter with electriferously changing the electromagnetic coil of the electromagnet 13 by a switch. The switch is arranged in the vicinity of a driver's seat in a cabin of the vehicle, and can be facilely operated by a driver. Further, it may be possible to omit the switch in a case that the driving force transmission device 10 is adapted to only the second mode described hereafter.

The cam mechanism 10e is constructed with the first cam member 17, a second cam member 18 and a cam follower 19. The first cam member 17 is rotatably engaged with an outer portion of the inner shaft 10b, and is rotatably supported onto the rear cover 11b. Further, the inner clutch plates 14b of the frictional clutch 14 are spline-engaged with an outer portion of the first cam member 17. On the other band, the second cam member 18 is spline-engaged with the outer portion of the inner shaft 10b to be rotatable therewith, and is arranged at a position facing the main clutch mechanism 10c at a rear side of the inner clutch plate 12a. In cam grooves facing the first cam member 17 with the second cam member 18 each other, there is disposed a cam follower 19 in the form of a ball.

In the driving force transmission device 10 as constructed above, when the electro-magnetic coil of the electro-magnet 13 that constructs the pilot clutch mechanism 10d is not electrified, the magnetic-path is not established, so that the frictional clutch 14 cannot be engaged. In such a state, the pilot clutch mechanism 10d is in a non-operation state, i.e., the first cam member 17 constructive of the cam mechanism 10e can be rotated together with the second cam member 18 through the cam follower 19, whereby the main clutch mechanism 10c is kept in the non-operation state. Therefore, the vehicle is operated by front wheel drive, i.e., the first mode.

On the other hand, in a case that the exciting current is supplied to the electromagnetic coil of the electromagnet 13, since the circulating magnetic path is established in the pilot clutch mechanism 10d based upon the electromagnet 13 as a base point, the armature 15 is magnetically attracted toward the electromagnet 13. In this case, the frictional clutch 14 is brought into engagement by the attraction of the armature 15 with the electromagnet 13, so that the first cam member 17 of the cam mechanism 10e is connected toward the outer case 10a, whereby the rotational speed difference is generated between the first and second cam members 17 and 18. As a result of this connection, the cam follower 19 in the cam mechanism 10e applies so as to travel the second cam member 18 from the first cam member 17 in a separative direction, i.e., in leftward in FIG. 1.

Namely, since the second cam member 18 is traveled toward the main clutch mechanism 10c, the main clutch mechanism 10c is frictionally engaged by traveling of the second cam member 18 in accordance with the frictional engagement force of the frictional clutch 14, whereby the torque transmission is performed from the outer case 10a to the inner shalt 10b. With this frictional engagement of the main clutch mechanism 10c, a connective status between the first propeller shaft 25 and the second propeller shaft 26 is continuously changed from the non-connective status to a directly connective status. This connective mode is referred to as the second mode. In the second mode, a driving force distribution ratio is controllably changed from 100:0 (front-wheel driving status) to 50:50 (direct four-wheel driving status) in correspondence with the driving status of the vehicle.

In a case that the exciting current supplied to the electromagnetic coil of the electromagnet 13 is increased to a predetermined value, the armature 15 is further attracted toward the electromagnet 13 by the increase of an attractive force, so that the frictional engagement force of the frictional clutch 14 is amplified, whereby the rotational speed difference is increased between the first and second cam members 17 and 18. As a result, since the second cam member 18 is further moved toward the main clutch mechanism 10c by the cam follower 19, the main clutch 10c is consequently brought into a direct engagement. Here, this status is referred to as a third mode (the direct four-wheel driving status) that connects the first propeller shaft 25 with the second propeller shaft 26.

In the pilot clutch 10d, the outer surface of the annular protrusion 16a1 of the yoke 16 engaged with the annular depression 11d of the rear cover 11b faces the outside inner surface 11d1 of the annular depression 11d thereof, and the inner surface of the inward protrusion 16a2 faces the inside outer surface 11d2 thereof. In such a situation, the magnetic-path areas are defined due to the facing areas of the rear cover 11b with the annular protrusion 16a1 and the inward protrusion 16a2 of the yoke 16. Namely, both the annular protrusion 16a1 and the inward protrusion 16a2 of the yoke 16 are positioned within the annular depression 11d of the rear cover 11b. However, both end portions of the outside inner surface 11d1 and the inside outer surface 11d2 of the annular depression 11d of the rear cover 11b are projected over the annular protrusion 16a1 and the inward protrusion 16a2 of the yoke 16 (i.e., rightward in Fig. 2).

In a case that the yoke 16 is assembled into the annular depression 11d of the rear cover 11b by engagement, the yoke 16 may be assembled at a certain position departing in the axial direction from a predetermined assembling position, due to dispersion in backlash of a bearing 16b rotatably supporting the yoke 16, dimensional errors of the yoke 16 and the rear cover 11b, assembling errors and the like. As a result, the annular protrusion 16a1 and the inward protrusion 16a2 of the yoke 16 are respectively projected over the end portions of the outside inner surface 11d1 and the inside outer surface 11d2 of the annular depression 11d of the rear cover 11b. Hence, the facing areas (magnetic-path areas) would become smaller than a predetermined value, so that a clutch characteristic of the pilot clutch mechanism may be changed.

In the pilot clutch mechanism 10d, both the end portions of the outside inner surface 11d1 and the inside outer surface 11d2 of the annular depression 11d of the rear cover 11b, however, are formed so as to be projected over the annular protrusion 16a1 and the inward protrusion 16a2 of the yoke 16. Therefore, even if the assembling position of the yoke 16 is departed in the axial direction, the annular protrusion 16a1 and the inward protrusion 16a2 of the yoke 16 are not projected from both the end portions of the outside inner surface 11d1 and the inside outer surface 11d2 of the annular depression 11d of the rear cover 11b. Consequently, the magnetic-path areas cannot be decreased due to the dispersion in backlash of the bearing 16b rotatably supporting the yoke 16, the dimensional errors of the yoke 16 and the rear cover 11b, the assembling errors and the like, whereby the clutch characteristic of the pilot clutch mechanism 10e cannot be changed.

Fig. 2 shows an explanatory view in a case that the yoke 16 is assembled into the annular depression 11d of the rear cover 11b. Even if the yoke is departed in the annular depression 11d of the rear cover 11b in the axial direction within an area shown by a one-dotted line of Fig. 2 during the assembling operation, there is no possibility that the annular protrusion 16a1 and the inward protrusion 16a2 of the yoke 16 are projected over both the end portions of the outside inner surface 11d1 and the inside outer surface 11d2 of the annular depression 11d of the rear cover 11b. Accordingly, the magnetic-path areas cannot be changed.

In the driving force transmission device 10 employing the pilot clutch mechanism 10d as a constructive part, fluctuation of transmissive torque (decrease of transmissive torque) in the main dutch mechanism 10c can be prevented based upon changing of the clutch characteristic in the pilot clutch mechanism 10d.

Obviously, numerous modifications and variations of the present invention are possible in light of the above teachings. It is therefore to be understood that within the scope of the appended claims, the present invention may be practiced otherwise than as specifically described herein.

An electromagnetic clutch provides a magnetic-path forming member, a frictional clutch and an armature positioned at one side of the magnetic-path forming member, a supporting member ranged at the other side of the magnetic-path forming member, an electromagnet rotatably supported by the supporting member, facing area formed between the supporting member and the magnetic-path forming member through a gap, and a protrusion provided on the facing area at one of the supporting member and the magnetic-path forming member. Further, a magnetic-path that a magnetic flux circulating from the electromagnet as a base point passes is established from the protrusion provided on the facing area through the supporting member, the magnetic-path forming member, the frictional clutch and the armature. In such a construction, the other of the supporting member and the magnetic-path forming member is overhung with respect to the protrusion.

## Claims

1. An electromagnetic clutch comprising:
a magnetic-path forming member;
a frictional clutch and an armature positioned at one side of said magnetic-path forming member;
a supporting member arranged at the other side of said magnetic-path forming member,
an electromagnet rotatably supported by said supporting member;
facing area formed between said supporting member and said magnetic-path forming member through a gap; and
a protrusion provided on said facing area at one of said supporting member and said magnetic-path forming member,
wherein a magnetic-path that a magnetic flux circulating from said electromagnet as a base point passes is established from said protrusion provided on said facing area through said supporting member, said magnetic-path forming member, said frictional clutch and said armature, and
wherein the other of said supporting member and said magnetic-path forming member is overhung with respect to said protrusion.

2. An electromagnetic clutch according to Claim 1, wherein said protrusion is formed on said supporting member.

3. An electromagnetic clutch to Claim 1, further comprising:
a cylindrical member disposed in said magnetic-path forming member and made of non-magnetic material,
wherein said magnetic-path forming member and said supporting member are made of magnetic material.

4. An electromagnetic clutch according to Claim 3, wherein said cylindrical member is made of stainless steel.
